# EUROPÄISCHE PATENTSCHRIFT

(11) **EP 2 412 552 B1**
(45) Veröffentlichungstag und Bekanntmachung des Hinweises auf die Patenterteilung: **10.09.2014**
(21) Anmeldenummer: 11005591.0
(22) Anmeldetag: 08.07.2011
(51) Int. Cl.: B60K 1/04, B62D 51/02, B66F 9/075

(54) **Lagertechnikflurförderzeug, insbesondere Schlepper oder Kommissionierer**
Warehouse industrial truck, in particular tractor or picker
Chariot élévateur pour entrepôts, en particulier tracteur ou chariot élévateur à poste de conduite relevable

(30) Priorität: 30.07.2010 DE 102010032906; 30.08.2010 DE 102010035817
(43) Veröffentlichungstag der Anmeldung: 01.02.2012
(73) Patentinhaber: Linde Material Handling GmbH, 63743 Aschaffenburg (DE)
(72) Erfinder: Pedelucq, Julien, 86530 Availles-en-Chatellerault (FR)
(74) Vertreter: Geirhos, Johann

(56) Entgegenhaltungen:
- EP-A1- 1 457 403
- EP-A2- 2 103 506
- EP-A2- 2 108 571
- CA-A1- 2 344 701
- FR-A1- 2 784 646
- GB-A- 2 423 503

## Beschreibung

Die Erfindung betrifft einen Schlepper mit einem batterie-elektrischen Antriebssystem und einem eine Fahrerstandplattform für eine stehende Bedienperson aufweisenden Fahrerarbeitsplatz, wobei zur Versorgung des Antriebssystems mindestens eine Batterie vorgesehen ist und an einem frontseitigen Ende des Schleppers eine Bedienanordnung angeordnet ist, wobei der Schlepper einen Fahrzeugrahmen aufweist, der am frontseitigen Ende mit einem um eine vertikale Achse lenkbar angeordneten Rad und am heckseitigen Ende mit zwei seitlich beabstandeten Rädern versehen ist.

Die gattungsbildende CA 2 344 701 A offenbart in der Figur 8 einen Schlepper, der zum Ziehen eines Anhängers dient. Der Schlepper der Figur 8 ist als Raupenschlepper ausgebildet, der eine linke und eine rechte Gleiskette als Fahrwerk umfasst. In der Figur 7 dieser Druckschrift ist als Variante A ein Fahrzeug mit einem 3-Rad-Fahrwerk offenbart, das ein lenkbares Vorderrad und zwei heckseitige Räder umfasst. Bei dieser Ausführungsform handelt es sich jedoch um ein reines Fahrzeug zur Personenbeförderung des Fahrers.

Die EP 1 457 403 A1 offenbart einen Gabelhubwagen, der im Mitgängerbetrieb von einer vor oder neben dem Gabelhubwagen laufenden Bedienperson bedient wird und aus einem Antriebsteil und einem aus zwei Lastgabeln bestehenden Lastteil besteht. Um der Bedienperson in einem Kommissionierbetrieb von Waren aus einer höheren Regalebene eines Regals separate Ausstiegshilfen wie Leitern oder Trittschemel zu ersparen, ist die Oberseite eines Antriebsteils des Gabelhubwagens als Standfläche ausgebildet, so dass die Bedienperson wenn diese auf der erhöhten Standfläche auf der Oberseite des Antriebsteils steht auch höhere Regalebene erreichen kann, um aus diesen Regalebenen Waren zu entnehmen. Um die auf der erhöhten Standfläche stehende Bedienperson gegen ein Herunterfallen auf den Lastteil zu sichern, ist bei dem Gabelhubwagen zwischen dem Antriebsteil und dem Lastteil ein Schutzgitter angeordnet, an dem zusätzlich eine Aufstiegshilfe mit Griffelementen ausgebildet sein kann, die der Bedienperson den Aufstieg auf die erhöhte Standfläche erleichtert.

Die FR 2 784 646 A1 offenbart ein Fahrzeug zur Beförderung eines stehenden Fahrers. Das Fahrzeug ist als Raupenfahrzeug mit einer rechten und linken Gleiskette versehen. Ein im mittleren Bereich des Fahrzeugs angeordneter Bügel ermöglicht dem stehenden Fahrer ein Festhalten und trägt einen Joystick zur Bedienung des Fahrzeugs.

Aus der GB 2 423 503 A ist ein Flurförderzeug mit einem Hubmast bekannt, bei dem ein Batteriefach unterhalb einer Plattform eines Fahrerarbeitsplatzes ausgebildet ist.

Der innerbetrieblichen Warentransport und Materialfluss, insbesondere die Materialversorgung von Produktionslinien in Produktionsbetrieben, erfolgt in der Regel mittels Anhängern, auf denen die zu transportierenden Waren, insbesondere mittels Paletten, innerhalb des Produktionsbetriebes transportiert werden.

Zum Ziehen eines oder mehrerer dieser Anhänger werden als Schlepper ausgebildete Lagertechnikflurförderzeuge verwendet, die mit einer entsprechenden Anhängvorrichtung versehen sind, an denen ein oder mehrere Anhänger angehängt werden können. Derartige Schlepper weisen kompakte Abmessungen auf, wodurch die Transportanhänger innerhalb eines Produktionsbetriebes auf beengten Transportwegen sicher transportiert werden können.

Bei gattungsgemäßen Schleppern ist ein Batteriefach, in dem eine das elektrische Antriebssystem des Schleppers mit elektrischer Energie versorgende Batterie, beispielsweise eine Traktionsbatterie, vor oder hinter der auf der Fahrerstandplattform stehenden Bedienperson in einem entsprechenden Batteriefach angeordnet. Die Batterie ist hierbei vertikal stehend angeordnet und erstreckt sich in der Regel über die gesamte Fahrzeugbreite des Schleppers. Bei einer Anordnung der Batterie vor dem Fahrerarbeitsplatz ist in der Regel die Bedienanordnung direkt vertikal oberhalb des Batteriefachs und der Batterie angeordnet.

Ein Schlepper, bei dem die Batterie in einem Batteriefach vor der auf einer Fahrerstandplattform stehenden Bedienperson angeordnet ist und die Bedienanordnung direkt oberhalb der in dem Batteriefach angeordneten Batterie angeordnet ist, ist aus der EP 2 108 571 A2 bekannt.

Die Anordnung der Batterie vor bzw. hinter dem Fahrerarbeitsplatz führt jedoch bei gattungsgemäßen Schleppern zu vergrößerten Längsabmessungen des Schleppers, wobei die stehende und vertikale Anordnung der Batterie zu einem hohen Gesamtschwerpunkt des Schleppers führt. Zudem führt die Anordnung der Batterie bei gattungsgemäßen Schleppern zu eingeschränkten Sichtverhältnissen für die Bedienperson.

Der vorliegenden Erfindung liegt die Aufgabe zugrunde, einen Schlepper der eingangs genannten Gattung zur Verfügung zu stellen, das hinsichtlich der Längenabmessungen und der Lage des Gesamtschwerpunktes verbessert ist und eine verbesserte Ergonomie aufweist.

Diese Aufgabe wird erfindungsgemäß durch einen Schlepper gemäß Anspruch 1 gelöst. Der erfindungsgemäße Gedanke besteht somit darin, bei einem als Schlepper ausgebildeten Lagertechnikflurförderzeug eine Unterfluranordnung der Batterie direkt unterhalb der Fahrerstandplattform für die stehende Bedienperson vorzusehen. Die erfindungsgemäße Unterfluranordnung der Batterie führt hierbei gegenüber gattungsgemäßen Schleppern durch den Entfall des Batteriefachs für die vertikal stehend angeordnete Batterie vor bzw. hinter dem Fahrerarbeitsplatz zu einer verringerten Gesamtlänge des Schleppers, wodurch bei dem erfindungsgemäßen Schlepper kompakte Abmessungen erzielbar sind, die eine erhöhte Wendigkeit des erfindungsgemäßen Schleppers ergeben. Zudem wird durch die Unterfluranordnung der Batterie unterhalb der Fahrerstandplattform ein niedriger Gesamtschwerpunkt des Schleppers erzielt, der zu einer verbesserten Stabilität des erfindungsgemäßen Schleppers führt. Die Unterfluranordnung der Batterie unterhalb der Fahrerstandplattform führt weiterhin zu einer günstigen mittigen Gewichtsverteilung des Schleppers in Fahrzeuglängsrichtung. Zudem werden Vorteile hinsichtlich einer verbesserten Ergonomie des erfindungsgemäßen Schleppers erzielt, da durch den Entfall eines Batteriefachs für die vertikal stehende, vor bzw. hinter dem Fahrerarbeitsplatz angeordnete Batterie das frontseitige Ende bzw. das heckseitige Ende und somit der Bereich vor und hinter dem Fahrerarbeitsplatz des erfindungsgemäßen Schleppers völlig frei gestaltet werden kann. Durch den Entfall des bisher vorhandenen Batteriefachs vor oder hinter dem Fahrerarbeitsplatz kann eine verbesserte Sicht für die Bedienperson erzielt werden. Zudem wird es ermöglicht, das frontseitige Ende bzw. das heckseitige Ende des erfindungsgemäßen Schleppers durch die freie Gestaltbarkeit an ergonomische Bedingungen, beispielsweise hinsichtlich der Anordnung der Bedienanordnung und weiterer Komponenten, anzupassen. Das heckseitige Ende des Schleppers ist hierbei von einer vertikalen Rahmenwand gebildet. Mit einer vertikalen Rahmenwand kann mit geringem Bauaufwand eine hohe Stabilität des Schleppers im heckseitigen Ende erzielt werden, das bevorzugt mit der Anhängevorrichtung versehen ist. An der heckseitigen vertikalen Rahmenwand des Schleppers ist weiterhin eine von einem Stehsitz oder einem Rückenpolster gebildete Stehhilfe für die auf der Fahrerstandplattform stehende Bedienperson angeordnet. Bei dem erfindungsgemäßen Schlepper kann der Bereich hinter dem Fahrerarbeitsplatz durch die Unterfluranordnung der Batterie völlig frei gestaltet werden. Mit einer Stehhilfe, die von einem höhenverstellbaren Stehsitz oder einem höhenverstellbaren Rückenpolster gebildet ist, kann die Ergonomie für die auf der Fahrerstandplattform stehende Bedienperson verbessert werden.

Gemäß einer bevorzugten Ausführungsform der Erfindung ist das Batteriefach zwischen einer bodenseitigen Rahmenplatte und der Fahrerstandplattform angeordnet. Hierdurch wird mit geringem Bauaufwand eine Unterfluranordnung der Batterie unterhalb der Fahrerstandplattform erzielt, wobei eine bodenseitige Rahmenplatte eine hohe Stabilität des erfindungsgemäßen Schleppers ermöglicht.

Gemäß einer bevorzugten Ausführungsform der Erfindung ist die Bedienanordnung von einem mit einem Fahrgeber versehenen Lenker bzw. Deichsel gebildet.

Besondere Vorteile sind erzielbar, wenn gemäß einer bevorzugten Weiterbildung der Erfindung das frontseitige Ende des Schleppers von einer mit der Bedienanordnung versehenen Säule, insbesondere einer in der Neigung und/oder in der Länge verstellbaren Säule, gebildet ist. Durch die Unterfluranordnung der Batterie unterhalb der Fahrerstandplattform kann das frontseitige Ende des Schleppers und somit der Bereich vor dem Fahrerarbeitsplatz völlig frei gestaltet werden. Dadurch wird ermöglicht, eine die Bedienanordnung tragende vertikale Säule am frontseitigen Ende des Schleppers anzuordnen, die mittig oder seitlich angeordnet werden kann. Sofern diese Säule mit einer Neigungsverstellbarkeit und/oder einer Längenverstellbarkeit versehen ist, kann eine Verstellbarkeit und Einstellbarkeit der Bedienanordnung erzielt werden, mit der die Ergonomie der Bedienanordnung verbessert werden kann. Zudem wird durch die Ausbildung des frontseitigen Bereichs des Schleppers von einer die Bedienanordnung tragenden Säule eine gute Sicht nach vorne erzielt. Zudem wird seitlich der Säule zusätzlicher Bauraum vor dem Fahrerarbeitsplatz gewonnen, der zum Anbau weiterer Komponenten, insbesondere ergonomischer Komponenten, genutzt werden kann, die die Bedienung des Schleppers erleichtern bzw. verbessern, wodurch die Ergonomie des erfindungsgemäßen Schleppers weiter erhöht und verbessert werden kann.

Bei dem erfindungsgemäßen Schlepper ist an einem heckseitigen Ende des Schleppers und somit hinter dem Fahrerarbeitsplatz eine Anhängevorrichtung angeordnet.

Die Batterie kann bei dem erfindungsgemäßen Schlepper in dem Batteriefach wechselbar angeordnet sein.

Alternativ ist möglich, dass die Batterie bei dem erfindungsgemäßen Schlepper in dem Batteriefach nicht-wechselbar angeordnet ist.

Die Fahrerstandplattform kann mit dem Fahrzeugrahmen, beispielsweise einer bodenseitigen Rahmenplatte, zu einer tragenden Struktur, beispielsweise einer Kastenstruktur verbunden sein, innerhalb der die Batterie angeordnet ist. Die Zugänglichkeit der Batterie zu Wartungszwecken oder zum Laden bzw. zum Aus- und Einbau ist durch den Zugang über eine seitliche Öffnung an einer oder beiden Seiten des Schleppers gewährleistet.

Besondere Vorteile sind erzielbar, wenn die Fahrerstandplattform klappbar angeordnet ist. Mit einer klappbaren Fahrerstandplattform kann eine einfache Zugänglichkeit zu dem Batteriefach und der darin angeordneten Batterie von oben erzielt werden, beispielsweise für Wartungszwecke, zum Wechseln der Batterie bzw. Austausch einer entladenen Batterie gegen eine aufgeladene Batterie oder zum Laden der Batterie im Batteriefach. Zudem ermöglicht eine klappbare Fahrerstandplattform mit einfachem zusätzlichen Bauaufwand eine gefederte und/oder gedämpfte Ausbildung der Fahrerstandplattform, beispielweise mittels geeigneter Gummipuffer, wodurch die Ergonomie für die auf der Fahrerstandplattform stehende Bedienperson weiter verbessert werden kann.

Die Batterie ist gemäß einer bevorzugten Ausgestaltungsform der Erfindung von einer Lithium-lonen-Batterie oder Nickel-Cadmium-Batterie oder Nickel-Metall-Hydrid-Batterie gebildet. Derartige Batterie-Typen weisen eine hohe Leistungsdichte auf, sind schnellladbar und weisen ein geringes Eigengewicht auf. Durch die Verwendung derartiger Batterie-Typen bei einem erfindungsgemäßen Schlepper kann somit mit der Unterfluranordnung der Batterie unterhalb der Fahrerstandplattform durch geringe Abmessungen der Batterie eine geringe Einstiegshöhe erzielt werden. Die Schnellladbarkeit ermöglicht ein einfaches Laden der Batterie im Batteriefach. Das geringe Eigengewicht derartiger Batterie-Typen ermöglicht weiterhin einen ergonomischen Ein- und Ausbau der Batterien bei einem Batteriewechsel von Hand ohne aufwändige Wechseleinrichtungen.

Das erfindungsgemäße Schlepper weist bevorzugt eine Anhängelast von höchstens 1500 kg, insbesondere von höchstens 1250 kg, auf. Ein erfindungsgemäßer Schlepper, der eine Anhängelast von höchstens 1500 kg, insbesondere von höchstens 1250 kg, aufweist, benötigt eine entsprechende verringerte Batteriekapazität, so dass durch entsprechende klein bauende und einen geringen Bauraumbedarf aufweisende Batterien trotz der Unterfluranordnung der Batterie unterhalb der Fahrerstandplattform eine geringe Einstiegshöhe erzielbar ist, um einen ergonomisch günstigen Auf- und Abstieg für die Bedienperson auf die Fahrerstandplattform zu erzielen.

Weitere Vorteile und Einzelheiten der Erfindung werden anhand des in den schematischen Figuren dargestellten Ausführungsbeispiels näher erläutert. Hierbei zeigt
- Figur 1: einen erfindungsgemäßen Schlepper in einer Seitenansicht und
- Figur 2: den Schlepper der Figur 1 in einer perspektivischen Darstellung.

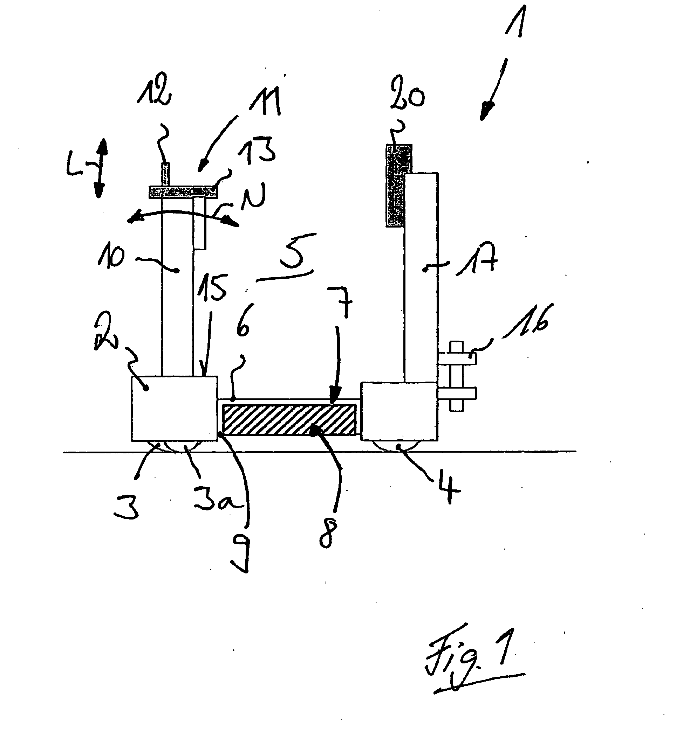

In der Figur 1 ist ein als Schlepper 1 ausgebildetes Lagertechnikflurförderzeug in einer Seitenansicht dargestellt.

Der erfindungsgemäße Schlepper 1 weist einen Fahrzeugrahmen 2 auf, der am frontseitigen Ende mit einem um eine vertikale Achse lenkbar angeordneten Rad 3 und am heckseitigen Ende mit zwei seitlich beabstandeten Rädern 4 versehen ist. Nicht näher dargestellt ist ein batterie-elektrisches Antriebssystem des erfindungsgemäßen Schleppers 1, das mindestens einen elektrischen Fahrantriebsmotor umfasst, der zum Antrieb des gelenkten Rades 3 bzw. der Räder 4 vorgesehen sein kann. Die Lenkung des gelenkten Rades kann manuell erfolgen oder mittels eines elektrischen Lenkmotors, der nicht näher dargestellt ist. Bei einer mittigen Anordnung des gelenkten Rades 3 können zur Erhöhung der seitlichen Stabilität des Schleppers 1 weiterhin im frontseitigen Ende seitliche Stützrollen 3a angeordnet werden.

Zwischen dem frontseitigen Ende und dem heckseitigen Ende ist der erfindungemäße Schlepper 1 mit einem Fahrerarbeitsplatz 5 versehen, der von einer Fahrerstandplattform 6 für eine stehende Bedienperson gebildet ist.

Erfindungsgemäß ist unterhalb der Fahrerstandplattform 6 ein Batteriefach 7 angeordnet, in dem eine oder mehrere Batterien 8 angeordnet sind, die das elektrische Antriebssystem des Schleppers 1 mit elektrischer Energie versorgen.

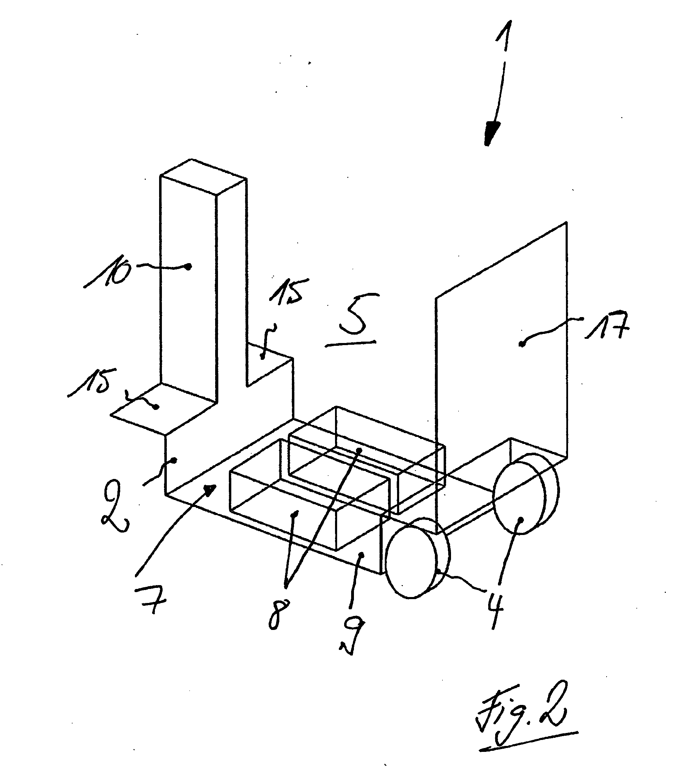

Der Fahrzeugrahmen 2 weist hierbei - wie in Zusammenschau mit der Figur 2 ersichtlich wird - eine bodenseitige Rahmenplatte 9 auf, wobei zwischen der bodenseitigen Rahmenplatte 9 und der Fahrerstandplattform 6 das Batteriefach 7 angeordnet ist, in dem die Batterien 8 angeordnet sind.

Die Unterfluranordnung der Batterien 8 ermöglicht es, das fronseitige Ende und das heckseitige Ende des Flurförderzeugs 1 völlig frei zu gestalten.

Im dargestellten Ausführungsbeispiel ist das frontseitige Ende des Schleppers 1 von einer in Fahrzeugquerrichtung mittig angeordneten vertikalen Säule 10 gebildet, an der eine Bedienanordnung 11 angeordnet ist.

Die Bedienanordnung 11 ist von einem mit einem Fahrgeber versehenen Lenker bzw. Deichsel 12 gebildet ist und kann weiterhin ein Armaturenbrett 13 umfassen, an dem weitere Steuer- und Bedienelemente des Schleppers 1 angeordnet sind, beispielsweise ein Display oder ein Notausschalter.

Die Säule 10 kann hierbei mit einer Neigungsverstellbarkeit N und/oder einer Längenverstellbarkeit L versehen sein, um eine Anpassung der Bedienanordnung 11 zu erzielen.

Wie in Verbindung mit der Figur 2 ersichtlich wird, in der der Schlepper 1 bei entfernter Fahrerstandplattform 6 dargestellt ist, wird durch die Anordnung der die Bedienanordnung 11 tragenden Säule 10 am frontseitigen Ende beiderseits der Säule 10 ein Freiraum gewonnen, der die Sicht der Bedienperson nach Vorne verbessert und an dem nicht näher dargestellte weitere Komponenten angeordnet werden können.

Beispielsweise kann seitlich von der Säule 10 eine Trittstufe 15 ausgebildet werden, die der Bedienperson ein Kommissionieren aus der ersten Regalebene ermöglicht.

Bei dem erfindungsgemäßen als Schlepper ausgebildeten Lagertechnikflurförderzeug 1 ist an dem heckseitigen Ende des Schleppers 1 eine Anhängevorrichtung 16 angeordnet ist. Das heckseitige Ende des Schleppers 1 ist von einer vertikalen Rahmenwand 17 gebildet.

An dem heckseitigen Ende des Schleppers 1 ist weiterhin eine Stehhilfe 20, die von einem Stehsitz oder einem Rückenpolster gebildet ist, für die auf der Fahrerstandplattform 6 stehende Bedienperson angeordnet ist. Die Stehhilfe 20 kann hierbei ebenfalls höhenverstellbar an der Rahmenwand 17 angeordnet werden.

Das von der Rahmenplatte 9 nach unten abgeschlossene Batteriefach 7 kann mittels zweier Seitenplatten zu den beiden Fahrzeugseiten abgeschlossen werden, so dass der Fahrzeugrahmen 2 im Bereich des Batteriefachs 7 im Querschnitt gesehen, einen U-förmigen bzw. wannenförmigen Querschnitt aufweist.

Die Fahrerstandplattform 6 ist bevorzugt klappbar am Fahrzeugrahmen 2 angeordnet, beispielsweise um eine in Querrichtung angeordnete Schwenkachse, die am vorderen oder hinteren Bereich der Fahrerstandplattform 6 angeordnet werden kann. Durch Aufklappen der Fahrerstandplattform 6 kann somit eine einfache Zugänglichkeit zu den unterhalb der Fahrerstandplattform 6 angeordneten Batterien 8 erzielt werden, um diese zu laden bzw. für einen Batteriewechsel auszutauschen. Zudem kann die Fahrerstandplattform 6 gefedert und/oder gedämpft aufgehängt sein, um die Ergonomie weiter zu verbessern.

Zusätzlich zu den bereits beschriebenen Vorteilen hinsichtlich der verbesserten Sichtverhältnisse und der Ergonomie durch die freie Gestaltbarkeit des frontseitigen Endes und des heckseitigen Endes des erfindungsgemäßen Schleppers 1 ergibt die erfindungsgemäße Unterfluranordnung der Batterien 8 unterhalb der Fahrerstandplattform 6 einen kompakten Schlepper mit geringen Abmessungen in Fahrzeugslängsrichtung. Zudem ergibt sich durch die Unterfluranordnung der Batterien 8 ein tiefer Gesamtschwerpunkt, der zu einer verbesserten Stabilität des Schleppers 1 führt. Zudem ermöglicht die Unterfluranordnung der Batterien 8 eine verbesserte Gewichtsverteilung durch eine im Wesentlichen mittige Anordnung der Batterien 8 zwischen dem lenkbaren Rad 3 und den Rädern 4.

Mit der erfindungsgemäßen Unterfluranordnung der Batterien 8 unterhalb der Fahrerstandplattform 6 kann insbesondere bei kleinen Schleppern mit einer Anhängelast von höchstens 1250kg ein Aufbau erzielt werden, der kompakte Abmessungen mit hoher Stabilität, guten Sichtverhältnissen für die Bedienperson und verbesserter Ergonomie vereint.

## Patentansprüche

1. Schlepper (1) mit einem batterie-elektrischen Antriebssystem und einem eine Fahrerstandplattform (6) für eine stehende Bedienperson aufweisenden Fahrerarbeitsplatz (5), wobei zur Versorgung des Antriebssystems mindestens eine Batterie (8) vorgesehen ist und an einem frontseitigen Ende des Schleppers (1) eine Bedienanordnung (11) angeordnet ist, wobei der Schlepper(1) einen Fahrzeugrahmen (2) aufweist, der am frontseitigen Ende mit einem um eine vertikale Achse lenkbar angeordneten Rad (3) und am heckseitigen Ende mit zwei seitlich beabstandeten Rädern (4) versehen ist,
**dadurch gekennzeichnet,**
**dass** im Bereich des Fahrerarbeitsplatzes (5) unterhalb der Fahrerstandplattform (6) ein Batteriefach (7) zur Aufnahme mindestens einer Batterie (8) des batterie-elektrischen Antriebssystems ausgebildet ist, bei dem die Fahrerstandplattform mit dem Fahrzeugrahmen zu einer tragenden Struktur verbunden ist, sowie der Zugang zu dem Batteriefach über eine seitliche Öffnung an einer oder beiden Seiten des Schleppers erfolgen kann, wobei das heckseitige Ende des Schleppers (1) von einer vertikalen Rahmenwand (17) gebildet ist und an der heckseitigen vertikalen Rahmenwand (17) des Schleppers (1) eine von einem Stehsitz oder einem Rückenpolster gebildete Stehhilfe (20) für die auf der Fahrerstandplattform (6) stehende Bedienperson angeordnet ist.

2. Schlepper nach Anspruch 1, **dadurch gekennzeichnet, dass** das Batteriefach (7) zwischen einer bodenseitigen Rahmenplatte (9) und der Fahrerstandplattform (6) angeordnet ist.

3. Schlepper nach Anspruch 1 oder 2, **dadurch gekennzeichnet, dass** die Bedienanordnung (11) von einem mit einem Fahrgeber versehenen Lenker bzw. Deichsel (12) gebildet ist.

4. Schlepper nach einem der Ansprüche 1 bis 3, **dadurch gekennzeichnet, dass** das frontseitige Ende des Schleppers (1) von einer mit der Bedienanordnung (11) versehenen Säule (10), insbesondere einer in der Neigung und/oder in der Länge verstellbaren Säule, gebildet ist.

5. Schlepper nach einem der Ansprüche 1 bis 4, **dadurch gekennzeichnet, dass** an einem heckseitigen Ende des Schleppers (1) eine Anhängevorrichtung (16) angeordnet ist.

6. Schlepper nach einem der Ansprüche 1 bis 5, **dadurch gekennzeichnet, dass** die Batterie (8) in dem Batteriefach (7) wechselbar angeordnet ist.

7. Schlepper nach einem der Ansprüche 1 bis 5, **dadurch gekennzeichnet, dass** die Batterie (8) in dem Batteriefach (7) nicht-wechselbar angeordnet ist

8. Schlepper nach einem der Ansprüche 1 bis 7, **dadurch gekennzeichnet, dass** die Fahrerstandplattform (6) klappbar angeordnet ist.

9. Schlepper nach einem der Ansprüche 1 bis 8, **dadurch gekennzeichnet, dass** die Batterie (8) von einer Lithium-Ionen-Batterie oder Nickel-Cadmium-Batterie oder Nickel-Metall-Hydrid-Batterie gebildet ist.

10. Schlepper nach einem der Ansprüche 1 bis 9, **dadurch gekennzeichnet, dass** der Schlepper (1) eine Anhängelast von höchstens 1500 kg, insbesondere von höchstens 1250 kg, aufweist.

## Claims

1. Tractor (1) having a battery-powered electric drive system and a driver workstation (5) having a driver platform (6) for a standing operator, wherein at least one battery (8) is provided in order to supply power to the drive system and an operator control arrangement (11) is arranged at a front end of the tractor (1), wherein the tractor (1) has a vehicle frame (2) which is provided at the front end with a wheel (3) which is arranged such that it can be steered about a vertical axis, and is provided at the rear end with two laterally spaced-apart wheels (4),
**characterized**
**in that** the battery compartment (7) for accommodating at least one battery (8) of the battery-powered electric drive system is formed in the region of the driver workstation (5) below the driver platform (6), in which the driver platform is connected to the vehicle frame to form a supporting structure, and also access to the battery compartment can be gained via a lateral opening on one or both sides of the tractor, wherein the rear end of the tractor (1) is formed by a vertical frame wall (17), and a standing aid (20), which is formed by a stand-up seat or a backrest cushion, for the operator standing on the driver platform (6) is arranged on the rear vertical frame wall (17) of the tractor (1).

2. Tractor according to Claim 1, **characterized in that** the battery compartment (7) is arranged between a frame plate (9) on the floor and the driver platform (6).

3. Tractor according to Claim 1 or 2, **characterized in that** the operator control arrangement (11) is formed by a handlebar or tiller (12) which is provided with a joystick.

4. Tractor according to one of Claims 1 to 3, **characterized in that** the front end of the tractor (1) is formed by a column (10) which is provided with the operator control arrangement (11), in particular a column of which the inclination and/or the length can be adjusted.

5. Tractor according to one of Claims 1 to 4, **characterized in that** a trailer apparatus (16) is arranged at a rear end of the tractor (1).

6. Tractor according to one of Claims 1 to 5, **characterized in that** the battery (8) is arranged in the battery compartment (7) in an exchangeable manner.

7. Tractor according to one of Claims 1 to 5, **characterized in that** the battery (8) is arranged in the battery compartment (7) in a non-exchangeable manner.

8. Tractor according to one of Claims 1 to 7, **characterized in that** the driver platform (6) is arranged such that it can be folded.

9. Tractor according to one of Claims 1 to 8, **characterized in that** the battery (8) is formed by a lithium-ion battery or a nickel-cadmium battery or a nickel-metal hydride battery.

10. Tractor according to one of Claims 1 to 9, **characterized in that** the tractor (1) has a towing capacity of at most 1500 kg, in particular of at most 1250 kg.

## Revendications

1. Tracteur (1) comprenant un système d'entraînement électrique à batterie et un poste de travail de conducteur (5) présentant une plate-forme de conduite à station debout (6) pour un opérateur se tenant debout, au moins une batterie (8) étant prévue pour l'alimentation du système d'entraînement et un agencement de commande (11) étant disposé à une extrémité avant du tracteur (1), le tracteur (1) présentant un châssis de véhicule (2) qui est pourvu, à l'extrémité avant, d'une roue (3) disposée de manière dirigeable autour d'un axe vertical et, à l'extrémité arrière, de deux roues (4) espacées latéralement,
**caractérisé en ce que**
dans la région du poste de travail de conducteur (5), en dessous de la plate-forme de conduite à station debout (6), est réalisé un compartiment de batterie (7) pour recevoir au moins une batterie (8) du système d'entraînement électrique à batterie, la plate-forme de conduite à station debout étant connectée au châssis du véhicule pour former une structure portante, et l'accès au compartiment de batterie pouvant s'effectuer par le biais d'une ouverture latérale au niveau d'un ou des deux côtés du tracteur, l'extrémité arrière du tracteur (1) étant formée par une paroi verticale du châssis (17) et un auxiliaire de maintien debout (20) formé par un siège de position debout ou par un rembourrage de dossier étant disposé au niveau de la paroi verticale arrière du châssis (17) du tracteur (1) pour l'opérateur debout sur la plate-forme de conduite à station debout (6).

2. Tracteur selon la revendication 1, **caractérisé en ce que** le compartiment de batterie (7) est disposé entre une plaque de châssis du côté du fond (9) et la plate-forme de conduite à station debout (6).

3. Tracteur selon la revendication 1 ou 2, **caractérisé en ce que** l'agencement de commande (11) est formé par un bras oscillant ou un timon (12) pourvu d'un détecteur de conduite.

4. Tracteur selon l'une quelconque des revendications 1 à 3, **caractérisé en ce que** l'extrémité avant du tracteur (1) est formée par une colonne (10) pourvue de l'agencement de commande (11), en particulier une colonne dont l'inclinaison et/ou la longueur peuvent être réglées.

5. Tracteur selon l'une quelconque des revendications 1 à 4, **caractérisé en ce qu'**un dispositif d'attelage (16) est disposé au niveau d'une extrémité arrière du tracteur (1).

6. Tracteur selon l'une quelconque des revendications 1 à 5, **caractérisé en ce que** la batterie (8) est disposée de manière remplaçable dans le compartiment de batterie (7).

7. Tracteur selon l'une quelconque des revendications 1 à 5, **caractérisé en ce que** la batterie (8) est disposée de manière non remplaçable dans le compartiment de batterie (7).

8. Tracteur selon l'une quelconque des revendications 1 à 7, **caractérisé en ce que** la plate-forme de conduite à station debout (6) est disposée de manière rabattable.

9. Tracteur selon l'une quelconque des revendications 1 à 8, **caractérisé en ce que** la batterie (8) est formée par une batterie lithium-ion ou par une batterie nickel-cadmium ou par une batterie hybride nickel-métal.

10. Tracteur selon l'une quelconque des revendications 1 à 9, **caractérisé en ce que** le tracteur (1) présente une charge de remorquage de 1500 kilos maximum, en particulier de 1250 kilos maximum.
